# EUROPEAN PATENT SPECIFICATION

(11) **EP 3 001 491 B1**
(45) Date of publication and mention of the grant of the patent: **06.11.2019**
(21) Application number: 15184589.8
(22) Date of filing: 10.09.2015
(51) Int. Cl.: H01M 8/1004, H01M 4/88, H01M 8/1086

(54) **CATALYST LAYER FORMING METHOD AND CATALYST LAYER FORMING APPARATUS**
KATALYSATORSCHICHTFORMUNGSVERFAHREN UND KATALYSATORSCHICHTFORMUNGSVORRICHTUNG
PROCÉDÉ DE FORMATION DE COUCHE DE CATALYSEUR ET APPAREIL DE FORMATION DE COUCHE DE CATALYSEUR

(30) Priority: 24.09.2014 JP 2014193324
(43) Date of publication of application: 30.03.2016
(73) Proprietor: SCREEN Holdings Co., Ltd., Kyoto 602-8585 (JP)
(72) Inventor: Takagi, Yoshinori, KYOTO-SHI, Kyoto 602-8585 (JP)
(74) Representative: Kilian Kilian & Partner

(56) References cited:
- EP-A1- 1 531 510
- WO-A2-03/073540
- JP-A- 2006 318 816
- JP-A- 2010 198 948
- US-A1- 2002 064 593
- US-A1- 2007 078 051
- HO-YOUNG JUNG ET AL: "Role of the glass transition temperature of Nafion 117 membrane in the preparation of the membrane electrode assembly in a direct methanol fuel cell (DMFC)", INTERNATIONAL JOURNAL OF HYDROGEN ENERGY., vol. 37, no. 17, 26 June 2012 (2012-06-26) , pages 12580-12585, XP055243341, GB ISSN: 0360-3199, DOI: 10.1016/j.ijhydene.2012.05.121

## Description

### BACKGROUND OF THE INVENTION

### Field of the Invention

The present invention relates to a catalyst layer forming method and a catalyst layer forming apparatus for forming a catalyst layer on a surface of an electrolyte membrane of a fuel cell.

### Description of the Background Art

In recent years, fuel cells have attracted attention as drive power sources mainly for automobiles, household use, and mobile phones. The fuel cell refers to the power-generation system of producing electric power through an electrochemical reaction between hydrogen (H₂) in the fuel and oxygen (O₂) in the air, which advantageously has high power-generation efficiency and low environmental burden.

The fuel cells come in a variety of types depending on an electrolyte for use, one example of which is a polymer electrolyte fuel cell (PEFC) that uses an ion-exchange membrane (electrolyte membrane) as an electrolyte. The PEFCs are expected to be applied to automobiles and portable devices because they can be operated at room temperature and can be reduced in size and weight.

A typical PEFC is a lamination of a plurality of cells. In one cell (unit cell), both sides of a membrane-electrode-assembly (MEA) are sandwiched between a pair of separators. The MEA is obtained by disposing gas diffusion layers on both sides of a catalyst-coated membrane (CCM) including catalyst layers on both sides of a thin film (polyelectrolyte membrane) of an electrolyte. The catalyst layer and the gas diffusion layer disposed on the both sides of the polyelectrolyte membrane form a pair of electrode layers, one of which is an anode electrode and the other of which is a cathode electrode. When the anode electrode contacts with a hydrogen-containing fuel gas and the cathode electrode contacts with the air, an electrochemical reaction occurs to produce electric power.

Such a CCM is typically produced by applying a catalyst ink (electrode paste), in which catalyst fine particles containing platinum (Pt) are dissolved in a solvent such as alcohol, to the front surface of an electrolyte membrane and then drying the catalyst ink (for example, Japanese Patent Application Laid-Open No. 2011-165460). Japanese Patent Application Laid-Open No. 2012-99379 discloses that an applied catalyst ink is heated to a high temperature equal to or higher than a glass transition temperature to decrease the free volume of constituent molecules, reducing a moisture content. The fuel cell produces water through the reaction between hydrogen and oxygen, and thus, a lower moisture content of a catalyst layer leads to a lower water holding performance, improving drainage performance. In other words, higher heat treatment temperature increases the drainage performance of a CCM, leading to improved power generation performance at a fuel cell as well.

Although heating a catalyst layer and an electrolyte membrane to a high temperature equal to or higher than a glass transition temperature improves the draining performance of a CCM, it may damage the characteristics of the CCM. For example, a catalyst layer and an electrolyte membrane are softened through heating to a high temperature equal to or higher than a glass transition temperature. Consequently, an electrolyte membrane and a support film, which is bonded to keep the electrolyte membrane's shape, may be brought into intimate contact more than necessary, making it difficult for the support film to be peel off.

Patent document US 2002/064593 A1 discloses a method of forming a catalyst-coated membrane including drying the catalyst ink in two steps at 70°C and 90°C.

Further prior art is known from patent documents JP 2006 318816 A, JP 2010 198948 A, EP 1 531 510 A1, WO 03/073540 A2 and US 2007/078051.

### SUMMARY OF THE INVENTION

The present invention is directed to a catalyst layer forming method of forming a catalyst layer on a surface of an electrolyte membrane of a fuel cell.
The invention is as defined in claims 1 and 4. Preferred embodiments are subject-matters of the dependent claims.

In one aspect of the present invention, a catalyst layer forming method includes the following steps of (a) transporting an electrolyte membrane having a support film attached to a first surface thereof, (b) applying a catalyst ink to part of a second surface of the electrolyte membrane, (c) heating the electrolyte membrane applied with the catalyst ink at a first temperature to evaporate a solvent contained in the catalyst ink to 30% or less of that before heating, and (d) drying the catalyst ink by heating the electrolyte membrane at a second temperature higher than the first temperature to form a catalyst layer after the step (c). The second temperature is higher than a glass transition temperature of the catalyst layer and is lower than a melting point of the catalyst layer.

A solvent is evaporated to some extent at lower temperature and is then heated at higher temperature, thus forming a catalyst layer having a low moisture content while preventing or reducing malfunctions due to excessive heating.

The first temperature is lower than the glass transition temperature of the electrolyte membrane.

An electrolyte membrane is accordingly prevented from becoming softened and then coming into excessively intimate contact with a support film.

The catalyst layer forming method preferably further includes the step of sandwiching the electrolyte membrane having the catalyst layer formed thereon between a pair of press rollers to compress the electrolyte membrane after the step (d). The pair of press rollers are regulated to a temperature equal to or higher than the glass transition temperature of the catalyst layer and a glass transition temperature of the electrolyte membrane.

The surface of the electrolyte membrane can be accordingly made almost flat.

The present invention is also directed to a catalyst layer forming apparatus that forms a catalyst layer on a surface of an electrolyte membrane of a fuel cell.

In one aspect of the present invention, a catalyst layer forming apparatus includes: a transport part that transports an electrolyte membrane having a support film attached to a first surface thereof, an application part that applies a catalyst ink to part of a second surface of the electrolyte membrane, a first drying part that heats the electrolyte membrane applied with the catalyst ink at a first temperature to evaporate a solvent contained in the catalyst ink to 30% or less of that before heating, and a second drying part that dries the catalyst ink by heating the electrolyte membrane heated in the first drying part at a second temperature higher than the first temperature to form a catalyst layer. The second temperature is higher than a glass transition temperature of the catalyst layer and is lower than a melting point of the catalyst layer.

A solvent is evaporated to some extent at lower temperature and is then heated at higher temperature, thereby forming a catalyst layer having a low moisture content while preventing or reducing malfunctions due to excessive heating.

The first temperature is lower than the glass transition temperature of the electrolyte membrane.

An electrolyte membrane is accordingly prevented from becoming softened and then coming into excessively intimate contact with a support film.

The catalyst layer forming apparatus preferably further includes a pair of press rollers that sandwich the electrolyte membrane having the catalyst layer formed thereon in the second drying part to compress the electrolyte membrane. The pair of press rollers are regulated to a temperature equal to or higher than the glass transition temperature of the catalyst layer and a glass transition temperature of the electrolyte membrane.

The surface of the electrolyte membrane can be accordingly made almost flat.

These and other objects, features, aspects and advantages of the present invention will become more apparent from the following detailed description of the present invention when taken in conjunction with the accompanying drawings.

### BRIEF DESCRIPTION OF THE DRAWINGS

FIG. 1 shows a schematic configuration of a catalyst layer forming apparatus for a fuel cell according to the present invention;
FIG. 2 is a flowchart showing the procedure of forming a catalyst layer on a surface of the electrolyte membrane in the catalyst layer forming apparatus of FIG. 1;
FIG. 3 is a cross-sectional view of an electrolyte membrane when it is unwound from an unwinding roller;
FIG. 4 shows the electrolyte membrane intermittently applied with a catalyst ink;
FIG. 5 is a cross-sectional view of the electrolyte membrane intermittently applied with the catalyst ink;
FIG. 6 shows the behavior of drying a catalyst ink layer in a first drying furnace and a second drying furnace;
FIG. 7 is a cross-sectional view of an electrolyte membrane having a catalyst layer formed on its surface; and
FIG. 8 shows hot-roll pressing.

### DESCRIPTION OF THE PREFERRED EMBODIMENTS

An embodiments of the present invention will be described below in detail with reference to the drawings.

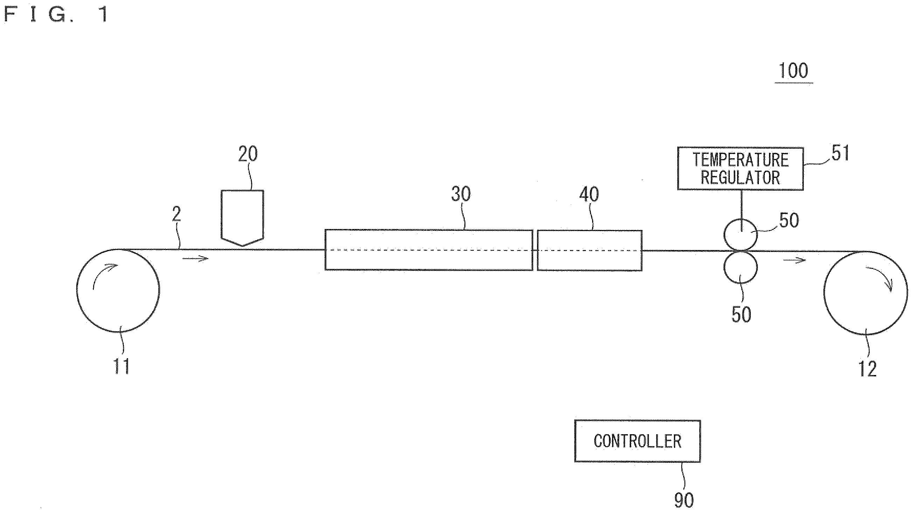

FIG. 1 shows a schematic configuration of a catalyst layer forming apparatus 100 for a fuel cell according to the present invention. The catalyst layer forming apparatus 100 applies a catalyst ink to the front surface of a belt-shaped electrolyte membrane 2 while continuously transporting the electrolyte membrane 2 and dries the catalyst ink to form a catalyst layer (an electrode layer) on the front surface of the electrolyte membrane 2, thereby producing a catalyst-coated membrane (CCM) of the polymer electrolyte fuel cell. The catalyst layer forming apparatus 100 according to this embodiment further hot-roll presses the electrolyte membrane 2 after the formation of the catalyst layer. Herein, the front surface of the electrolyte membrane 2 is any one of the two surfaces of the electrolyte membrane 2, on which a catalyst layer of an anode electrode or a cathode electrode is formed (in this embodiment, a catalyst layer of a cathode electrode is formed). Meanwhile, the rear surface of the electrolyte membrane 2 is a surface opposite to the front surface, on which a catalyst layer having a polarity opposite to that of the front surface is formed. In other words, the front surface and the rear surface of the electrolyte membrane 2 are not different from each other in the property as an electrolyte membrane and are merely referred to as a front surface and a rear surface for the sake of distinction. Either specific surface is not limited to a front surface or a rear surface.

The catalyst layer forming apparatus 100 includes, as its main components, an unwinding roller 11, a coating nozzle 20, a first drying furnace 30, a second drying furnace 40, a pair of press rollers 50, 50, and a winding roller 12. Additionally, the catalyst layer forming apparatus 100 includes a controller 90 that manages the overall apparatus.

The electrolyte membrane 2 having a backsheet 6 attached thereto for protection is wound around the unwinding roller 11. The unwinding roller 11 is rotated by a drive motor (not shown), thereby continuously sending out the electrolyte membrane 2 with the backsheet 6. The electrolyte membrane 2, sent out from the unwinding roller 11, is wound around the winding roller 12, to thereby be transported at a constant speed continuously in the order of the coating nozzle 20, the first drying furnace 30, and the second drying furnace 40. In other words, the unwinding roller 11 and the winding roller 12 constitute a transport part that transports the electrolyte membrane 2 with the backsheet 6 in a roll-to-roll mode. The catalyst layer forming apparatus 100 may be provided with one or more auxiliary rollers that support the electrolyte membrane 2 from downward along the transport path of the electrolyte membrane 2 ranging from the unwinding roller 11 to the winding roller 12.

The electrolyte membrane 2 may be fluorine-based or hydrocarbon-based polyelectrolyte membranes that have been used for CCMs of polymer electrolyte fuel cells. For example, the electrolyte membrane 2 may be a polyelectrolyte membrane containing perfluorocarbon sulfonic acid (e.g., Nation (registered trademark) manufactured by USA DuPont), Flemion (registered trademark) manufactured by Asahi Glass Co. Ltd, Aciplex (registered trademark) manufactured by Asahi Kasei Corporation, and Goreselect (registered trademark) manufactured by Gore).

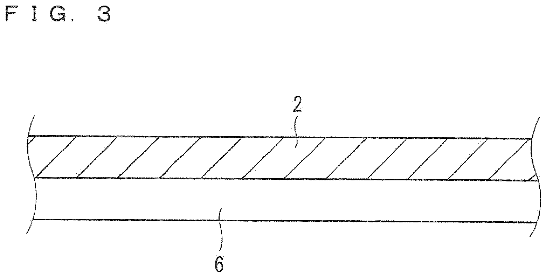

The electrolyte membrane 2 described above, which is very thin and has a low mechanical strength, has the characteristics of easily swelling even with a small amount of moisture in the air and shrinking with lower humidity, and thus, is extremely prone to deformation. For this reason, in the initial state, the electrolyte membrane 2 with the backsheet 6 is wound around the unwinding roller 11 to prevent deformation of the electrolyte membrane 2. The electrolyte membrane 2 deforms extremely easily even with a small amount of moisture in the air. Thus, the backsheet 6 being a belt-shaped resin film for keeping a shape has been attached to the electrolyte membrane 2 before it is wound in the manufacture of the electrolyte membrane 2 (see FIG. 3).

The backsheet 6 may be a film of a resin material having high mechanical strength and an excellent shape-holding function, such as PEN (polyethylene naphthalate) or PET (polyethylene terephthalate). In this embodiment, the backsheet 6 is attached to the rear surface of the electrolyte membrane 2. The initial-state electrolyte membrane 2 with the backsheet 6, which is wound around the unwinding roller 11, has a film thickness of 5 to 30 µm and a width of up to about 300 mm. The backsheet 6 has a film thickness of 25 to 100 µm and has a width slightly larger than the width of the electrolyte membrane 2. The width of the backsheet 6 may be the same as the width of the electrolyte membrane 2.

The coating nozzle 20, the first drying furnace 30, the second drying furnace 40, and the pair of press rollers 50, 50 are provided in the stated order at some midpoint of the transport path for the electrolyte membrane 2, which extends from the unwinding roller 11 to the winding roller 12. The coating nozzle 20 is a slit nozzle having a slit-shaped discharge port along the width direction of the electrolyte membrane 2. The coating nozzle 20 is provided such that the discharge direction from its discharge port extends substantially downward. Additionally, attached to the coating nozzle 20 are a mechanism (not shown) for adjusting the spacing between its discharge port and the electrolyte membrane 2 and a mechanism (not shown) for regulating its posture.

The coating nozzle 20 is supplied with a catalyst ink as a coating liquid from an ink supply mechanism (not shown). The catalyst ink used in this embodiment contains, for example, catalyst fine particles, an ion-conducting electrolyte, and a dispersion medium. The catalyst fine particles may be any known or commercially available catalyst fine particles without any particular limitations, as long as they can cause a fuel cell reaction in the anode or cathode of a polymer electrolyte fuel cell. For example, platinum (Pt), a platinum alloy, a platinum compound, or the like may be used. Among them, examples of the platinum alloy include alloys of platinum with at least one selected from the group consisting of, for example, ruthenium (Ru), palladium (Pd), nickel (Ni), molybdenum (Mo), iridium (Ir), and iron (Fe). Platinum is generally used as the catalyst fine particles for the cathode catalyst ink, and any of the above-mentioned platinum alloys is used as the catalyst fine particles for the anode catalyst ink.

Alternatively, the catalyst fine particles may be so-called catalyst-supporting carbon powder in which catalyst fine particles are supported on carbon powder. The average particle diameter of the catalyst-supporting carbon is usually about 10 to 100 nm, preferably about 20 to 80 nm, most preferably about 40 to 50 nm. There is no particular limitation on the carbon powder that supports the catalyst fine particles, and examples thereof include carbon blacks such as channel black, furnace black, ketjen black, acetylene black, and lamp black, graphite, activated carbon, carbon fiber, and carbon nanotube. They may be used alone or in combination of two or more.

The catalyst fine particles, to which a solvent is added, are used as a paste that can be applied from the slit nozzle. The solvent may be water or organic solvents including alcohol-based solvents such as ethanol, n-propanol, and n-butanol, ether-based solvents, ester-based solvents, and fluorine-based solvents.

A polyelectrolyte solution obtained by dispersing an ionomer having an ion-exchange group in a solvent is added to a solution obtained by adding the solvent to catalyst fine particles. In one example, a catalyst ink can be obtained by dispersing carbon black that supports 50 wt% of platinum ("TEC10E50E" manufactured by TANAKA KIKINZOKU KOGYO K.K.) in a solution of water, ethanol, and polyelectrolyte solution (Nafion liquid "D2020" manufactured by USA DuPont). The resultant paste mixture is supplied as a catalyst ink to the coating nozzle 20.

The coating nozzle 20 discharges the supplied catalyst ink from the discharge port and applies the catalyst ink to the front surface of the electrolyte membrane 2 travelling under the coating nozzle 20. The coating nozzle 20 is capable of continuous coating when continuously discharging a catalyst ink or intermittent coating when intermittently discharging a catalyst ink. The discharge flow rate of the catalyst ink discharged from the coating nozzle 20 is adjusted by the controller 90 controlling, for example, the pump of the ink supply mechanism. A backup roller may be provided so as to be opposed to the coating nozzle 20 such that a catalyst ink is applied, from the coating nozzle 20, to the front surface of the electrolyte membrane 2 supported by the backup roller from the rear surface side.

The first drying furnace 30 is provided downstream of the coating nozzle 20 at some midpoint of the transport path of the electrolyte membrane 2. The first drying furnace 30 performs preliminary drying of evaporating a solvent from the catalyst ink applied to the front surface of the electrolyte membrane 2 by blowing a hot air of a first temperature T1 toward the electrolyte membrane 2 passing therethrough to heat the electrolyte membrane 2. The preliminary drying removes a predetermined amount of solvent from the catalyst ink. The first drying furnace 30 may blow a hot air toward only the front surface of the electrolyte membrane 2 or may blow a hot air toward both of the front and rear surfaces. The drying furnace 30 may be a known hot-air drying furnace or a drying furnace using far infrared, near infrared, or superheated steam, in addition to hot-air drying.

The second drying furnace 40 is provided downstream of the first drying furnace 30 at some midpoint of the transport path of the electrolyte membrane 2. The first drying furnace 30 and the second drying furnace 40 may be provided without a gap or with a slight amount of spacing therebetween. The length of the first drying furnace 30 along the transport path of the electrolyte membrane 2 is about twice as large as the length of the second drying furnace 40. The second drying furnace 40 performs finish-drying of the catalyst ink applied to the front surface of the electrolyte membrane 2 by blowing a hot air of a second temperature T2 toward the electrolyte membrane 2 passing therethrough to heat the electrolyte membrane 2, thereby forming a catalyst layer. The second drying furnace 40 may blow a hot air toward only the front surface of the electrolyte membrane 2 or may blow a hot air toward both of the front and rear surfaces of the electrolyte membrane 2. The second drying furnace 40 may be a known hot-air drying furnace similarly to the first drying furnace 30 or may be a drying furnace using far infrared, near infrared, or superheated steam, in addition to hot-air drying.

The second temperature T2 of the hot air blown from the second drying furnace 40 is higher than the first temperature T1 of the hot air blown from the first drying furnace 30. The second temperature T2 of the second drying furnace 40 is higher than the glass transition temperature of the catalyst layer formed on the front surface of the electrolyte membrane 2 and is lower than the melting point of the catalyst layer. The first temperature T1 of the first drying furnace 30 is equal to or higher than the boiling point of the solvent of the catalyst ink and is lower than the glass transition temperature of the electrolyte membrane 2. The drying processes for the catalyst ink in the first drying furnace 30 and the second drying furnace 40 will be described below in detail.

The pair of press rollers 50, 50 are provided downstream of the second drying furnace 40 along the transport path of the electrolyte membrane 2 extending from the unwinding roller 11 to the winding roller 12. The pair of press rollers 50, 50 are disposed so as to have a spacing (roll gap) of a predetermined value. The roll gap of the pair of press rollers 50, 50 is adjusted to a value smaller than a total thickness of the electrolyte membrane 2, the backsheet 6, and the formed catalyst layer. The electrolyte membrane 2 being transported passes through between the pair of press rollers 50, 50, enabling roll pressing in which the electrolyte membrane 2 having a catalyst layer formed thereon is sandwiched between the pair of press rollers 50, 50 from the front- and rear-surface sides to be compressed.

The temperature of the pair of press rollers 50, 50 is regulated by a temperature regulator 51. The temperature regulator 51 may be, for example, a mechanism for supplying power to a heater contained in the press rollers 50, 50 or a mechanism for supplying hot water to the piping provided in the press rollers 50, 50. The temperature regulator 51 heats the pair of press rollers 50, 50 to a temperature equal to or higher than the glass transition temperature of the catalyst layer and the glass transition temperature of the electrolyte membrane 2. Roll pressing by the heated pair of press rollers 50, 50 allows the electrolyte membrane 2 having a catalyst layer formed thereon to be compressed (hot-roll pressed) while being heated.

The electrolyte membrane 2 that has passed through between the pair of press rollers 50, 50 is wound around the winding roller 12. The winding roller 12 is rotated by a drive motor (not shown) to wind the electrolyte membrane 2 having a catalyst layer formed on its front surface while having the backsheet 6 attached to its rear surface. The winding roller 12 provides a constant tension to the electrolyte membrane 2 with a backsheet 6 that has been sent out from the unwinding roller 11.

The controller 90 has a hardware configuration similar to that of a general-purpose computer. More specifically, the controller 90 includes a CPU that performs various computation processes, a ROM being a read-only memory that stores a basic program, a RAM being a readable and rewritable memory that stores various types of information, and a magnetic disk that stores control software, data, and the like. The various operation mechanisms provided in the catalyst layer forming apparatus 100 are controlled by the CPU of the controller 90 executing a predetermined processing program, so that the process of forming a catalyst layer proceeds.

The catalyst layer forming apparatus 100 for a fuel cell may appropriately include other elements in addition to the above-mentioned configuration. For example, in the use of the electrolyte membrane 2 having the backsheet 6 and a front sheet attached to its front surface, a mechanism for peeling off the front sheet may be provided. Alternatively, a mechanism for adjusting a tension acting on the electrolyte membrane 2 may be provided.

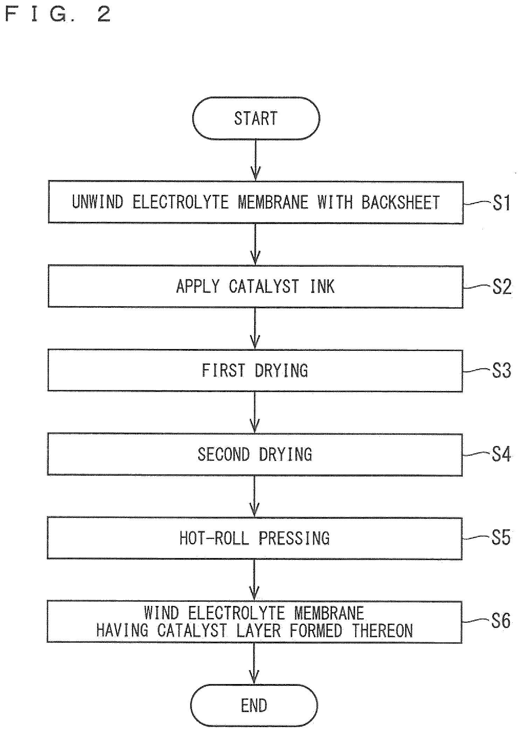

The following will describe a procedure in the catalyst layer forming apparatus 100 for a fuel cell, configured as described above. FIG. 2 is a flowchart showing the procedure for forming a catalyst layer on the front surface of the electrolyte membrane 2 in the catalyst layer forming apparatus 100. The procedure described below proceeds by the controller 90 controlling each operating mechanism of the catalyst layer forming apparatus 100.

First, the unwinding roller 11 unwinds the electrolyte membrane 2 with the backsheet 6 (Step S1). When the electrolyte membrane 2 unwound from the unwinding roller 11 is wound around the winding roller 12, the electrolyte membrane 2 is continuously transported at a constant speed in a roll-to-roll mode.

FIG. 3 is a cross-sectional view of the electrolyte membrane 2 when it is unwound from the unwinding roller 11. The backsheet 6 is attached to the rear surface of the electrolyte membrane 2 unwound from the unwinding roller 11. As described above, the electrolyte membrane 2 for the polymer electrolyte fuel cell is highly vulnerable to deformation due to even a slight amount of moisture contained in the air. For this reason, the backsheet 6, being a belt-shaped resin film for keeping a shape, is attached to the rear surface of the electrolyte membrane 2 before it is wound in the manufacture of the electrolyte membrane 2. Such an electrolyte membrane 2, which is wound around the unwinding roller 11, is unwound as a yet-to-be-processed electrolyte membrane 2.

Then, the coating nozzle 20 applies a catalyst ink to the front surface of the electrolyte membrane 2 that is transported after being sent out from the unwinding roller 11 (Step S2). The catalyst ink applied to the electrolyte membrane 2 for a polymer electrolyte fuel cell is the ink as described above, which contains catalyst fine particles of platinum or platinum alloys and an ionomer. In this embodiment, the coating nozzle 20 applies a catalyst ink for a cathode electrode to the front surface of the electrolyte membrane 2.

In general, a catalyst ink for a cathode, which is several times more than a catalyst ink for an anode, is applied to the electrolyte membrane 2. In an electrochemical reaction of a fuel cell, hydrogen ions produced at the anode electrode pass through the electrolyte membrane and travel to the cathode electrode to react with oxygen, so that the reaction water is produced at the cathode electrode. From the viewpoint of improving the power generation performance of a fuel cell, therefore, it is important to minimize the moisture content of a cathode catalyst layer.

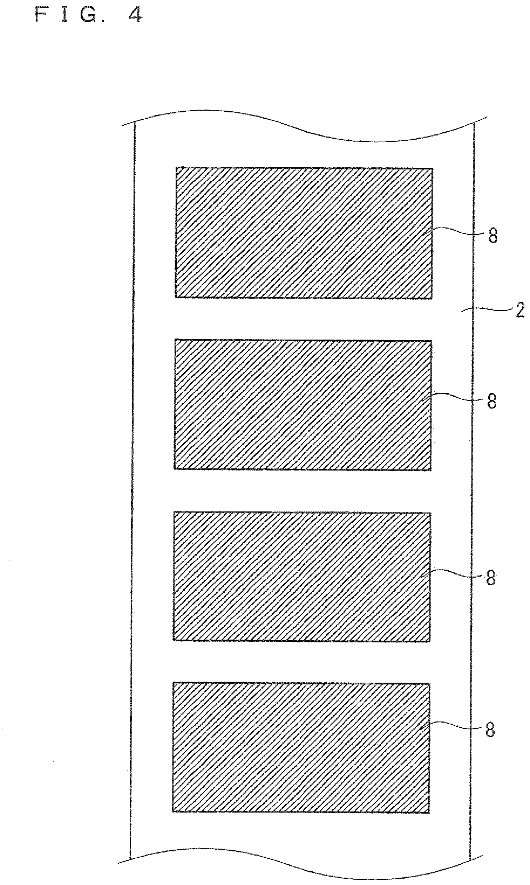

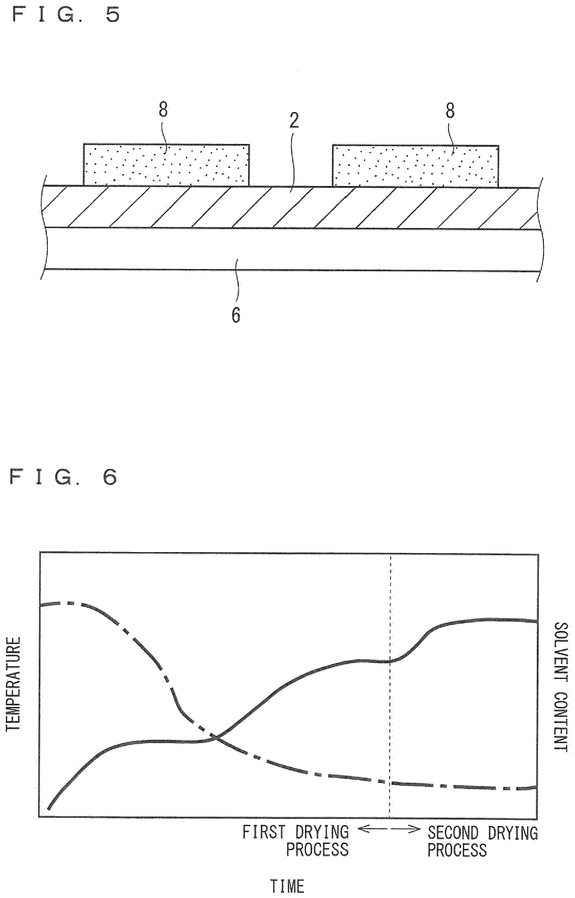

The coating nozzle 20 applies a catalyst ink for a cathode to the front surface of the electrolyte membrane 2 continuously transported at a constant speed. Applying a catalyst ink to the front surface of the electrolyte membrane 2, transported at a constant speed, from the coating nozzle 20 enables uniform application of a catalyst ink. In this embodiment, the coating nozzle 20 intermittently discharges a catalyst ink, so that the catalyst ink is intermittently applied to part of the front surface of the electrolyte membrane 2. FIG. 4 shows the electrolyte membrane 2 intermittently applied with a catalyst ink. FIG. 5 is a cross-sectional view of the electrolyte membrane 2 intermittently applied with a catalyst ink. When the coating nozzle 20 intermittently discharges a catalyst ink to the electrolyte membrane 2 transported at a constant speed, as shown in FIGS. 4 and 5, the catalyst ink layers 8 uniform in size are equidistantly formed on the front surface of the electrolyte membrane 2 in a non-continuous manner.

The width of each catalyst ink layer 8 formed on the front surface of the electrolyte membrane 2 is defined by the width of the slit-shaped discharge port of the coating nozzle 20. The length of each catalyst ink layer 8 is defined in accordance with the catalyst ink discharge time of the coating nozzle 20 and the transport speed of the electrolyte membrane 2. The thickness (height) of the catalyst ink layer 8, which is defined by the distance between the discharge port of the coating nozzle 20 and the front surface of the electrolyte membrane 2, the discharge flow rate of the catalyst ink, and the transport speed of the electrolyte membrane 2, is, for example, 10 to 300 µm. The catalyst ink is a paste that can be applied from the coating nozzle 20 and has a viscosity high enough to keep the shape of the catalyst ink layer 8 on the electrolyte membrane 2.

Subsequently, a first drying process is performed when the electrolyte membrane 2 having the catalyst ink layer 8 formed on its front surface is transported to the first drying furnace 30 and passes therethrough (Step S3). Then, a second drying process is performed when the electrolyte membrane 2 is transported to the second drying furnace 40 and passes therethrough (Step S4). The two stages of drying processes heat the catalyst ink layer 8 to volatilize a solvent component, changing the catalyst ink layer 8 into a catalyst layer 9.

The first drying furnace 30 performs a preliminary drying process for the catalyst ink layer 8 by blowing a hot air of the first temperature T1 toward the electrolyte membrane 2 having the catalyst ink layer 8 formed thereon. The first temperature T1 is equal to or higher than the boiling point of the solvent of the catalyst ink and is lower than the glass transition temperature of the electrolyte membrane 2. The second drying furnace 40 performs a finish drying process by blowing a hot air of the second temperature T2 higher than the first temperature T1 toward the catalyst ink layer 8 preliminarily dried in the first drying furnace 30. The second temperature T2 is higher than the glass transition temperature of the catalyst layer 9 formed of the dried catalyst ink layer 8 and is lower than the melting point of the catalyst layer 9.

FIG. 6 shows the behavior of drying the catalyst ink layer 8 in the first drying furnace 30 and the second drying furnace 40. The horizontal axis of FIG. 6 represents an elapsed time since the entrance of the catalyst ink layer 8 into the first drying furnace 30. The vertical axis of FIG. 6 represents the temperature of the catalyst ink layer 8 and the content of a solvent contained in the catalyst ink layer 8. In FIG. 6, the solid line represents the temperature of the catalyst ink layer 8, and a chain line represents the solvent content in the catalyst ink layer 8.

As shown in FIG. 6, if the catalyst ink layer 8 is heated strongly at an initial drying stage, the temperature of the catalyst ink layer 8 will not rise beyond a certain temperature while the catalyst ink layer 8 contains some amount of solvent. More specifically, the first drying furnace 30 cannot heat the catalyst ink layer 8 beyond a certain temperature while some amount of solvent remains after blowing of a high-temperature hot air, and merely, the evaporation of the solvent of the catalyst ink layer 8 proceeds. On the contrary, blowing a hot air of equal to or higher than the glass transition temperature of the electrolyte membrane 2 in the first drying furnace 30 allows the electrolyte membrane 2 to become softened to come into excessively intimate contact with the backsheet 6. The backsheet 6 needs to peel off the electrolyte membrane 2 later when a catalyst ink for an anode is applied to the rear surface of the electrolyte membrane 2. Excessively intimate contact of the backsheet 6 with the electrolyte membrane 2 may hinder the peeling and, in the worst case, may damage the electrolyte membrane 2 during peeling.

In this embodiment, therefore, the first drying furnace 30 performs a preliminary drying process for the catalyst ink layer 8 by blowing a hot air of the first temperature T1 that is equal to or higher than the boiling point of the solvent of a catalyst ink and is lower than the glass transition temperature of the electrolyte membrane 2. Although blowing of a hot air of the first temperature T1 in the first drying furnace 30 prevents the temperature of the catalyst ink layer 8 from rising beyond a certain temperature while 30% or more of the solvent remains, the solvent continuously evaporates from the catalyst ink layer 8. The first drying furnace 30 evaporates the solvent such that the solvent contained in the catalyst ink layer 8 is 30% or less of that before heating (immediately after application). More specifically, letting the solvent content of the catalyst ink layer 8 before heating be 100, the first drying furnace 30 performs the preliminary drying process until the solvent content is 30 or less. The first drying furnace 30 blows a hot air of the first temperature T1 lower than the glass transition temperature of the electrolyte membrane 2, preventing the electrolyte membrane 2 from becoming softened to come into excessively intimate contact with the backsheet 6. The processing time of the preliminary drying process in the first drying furnace 30 is, for example, about one minute.

As shown in FIG. 6, when the solvent contained in the catalyst ink layer 8 reduces to 30% or less of that before heating, the temperature of the catalyst ink layer 8 rises through blowing of a hot air. In this embodiment, after the shift to the above-mentioned state in the first drying furnace 30, the second drying furnace 40 performs a finish drying process by blowing a hot air of the second temperature T2, thereby forming the catalyst layer 9. The second temperature T2 is higher than the glass transition temperature of the catalyst layer 9 at which the catalyst ink layer 8 is formed through drying. More specifically, the second temperature T2 is higher than the glass transition temperature of the ionomer contained in the catalyst ink layer 8. Thus, blowing a hot air of the second temperature T2 by the second drying furnace 40 further evaporates the solvent in the catalyst ink layer 8 and increases the temperature of the catalyst ink layer 8 to the certain temperature or higher. This reduces the free volume of molecules constituting an ionomer contained in the catalyst ink layer 8, thereby reducing the moisture content of a to-be-formed catalyst layer 9. The second temperature T2 is lower than the melting point of the catalyst layer 9, so that the catalyst layer 9 can be prevented from melting.

The second temperature T2 is higher than the first temperature T1 and may be presumably higher than the glass transition temperature of the electrolyte membrane 2. This leads to a fear that the electrolyte membrane 2 may become softened to come into intimate contact with the backsheet 6 in the second drying furnace 40. The processing time of the finish drying process by the second drying furnace 40 is, however, considerably shorter than the processing time of the preliminary drying process by the first drying furnace 30, which is not more than half the time of the preliminary drying process, and is, for example, about 30 seconds. Shorter processing time of the finish drying process by the second drying furnace 40 prevents the electrolyte membrane 2 from coming into excessively intimate contact with the backsheet 6 if the second temperature T2 is higher than the glass transition temperature of the electrolyte membrane 2. The drying process time for the electrolyte membrane 2 transported at a constant speed is defined by the lengths of the first drying furnace 30 and the second drying furnace 40. For the drying process time in the second drying furnace 40 to be not larger than half the time in the first drying furnace 30, it suffices to set the length of the second drying furnace 40 to be not more than half the length of the first drying furnace 30.

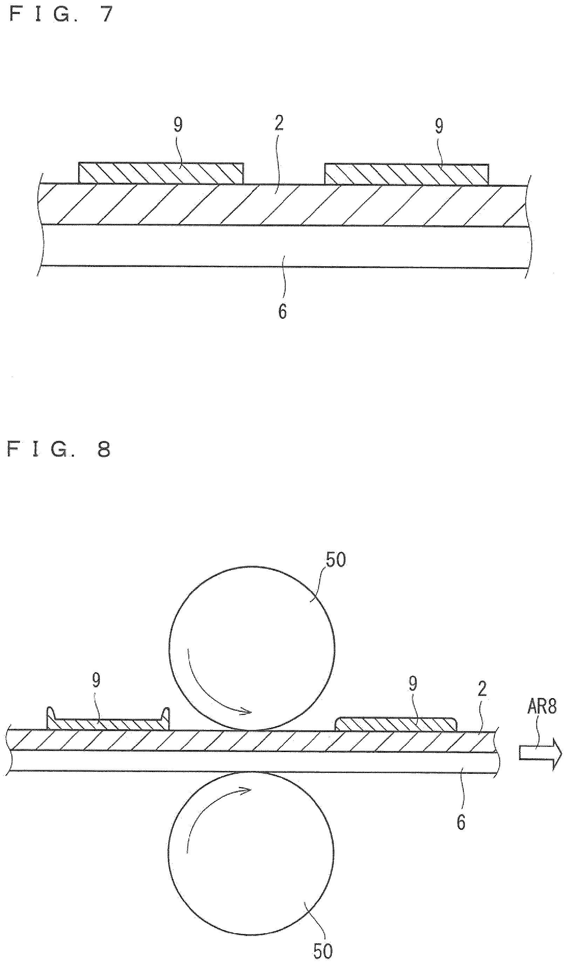

The catalyst ink layer 8, which has been dried in the first drying furnace 30 and the second drying furnace 40 as described above, turns into the catalyst layer 9. FIG. 7 is a cross-sectional view of the electrolyte membrane 2 having the catalyst layer 9 formed on its front surface. The catalyst layer 9 is an electrode layer in which catalyst fine particles such as platinum are supported. The catalyst layer 9 is the catalyst ink layer 8 that has solidified, from which a solvent component has volatilized, and thus, has a thickness smaller than that of the catalyst ink layer 8. The catalyst layer 9 after being dried has a thickness of, for example, 3 to 50 µm. In this embodiment, the catalyst layer 9 is formed on the front surface of the electrolyte membrane 2, and the backsheet 6 remains attached to the rear surface of the electrolyte membrane 2.

Next, hot-roll pressing is performed in which the electrolyte membrane 2 having the catalyst layer 9 formed on its front surface, which has reached the pair of press rollers 50, 50, is sandwiched between the pair of press rollers 50, 50 to be compressed (Step S5). FIG. 8 shows the hot-roll pressing process. The electrolyte membrane 2 is transported in the direction indicated by the arrow AR8 by the unwinding roller 11 and the winding roller 12. The electrolyte membrane 2 having the catalyst layer 9 formed thereon passes through between the pair of press rollers 50, 50. The pair of press rollers 50, 50 may be rotated by a rotation drive mechanism (not shown) such that the speed thereof matches the transport speed of the electrolyte membrane 2.

The spacing between the pair of press rollers 50, 50 is set to a value smaller than a total thickness of the electrolyte membrane 2, the backsheet 6, and the formed catalyst layer 9 before pressing. While the electrolyte membrane 2 transported in the direction of the arrow AR8 passes through between the pair of press rollers 50, 50, the electrolyte membrane 2 having the catalyst layer 9 formed thereon is sandwiched between the pair of press rollers 50, 50 to be compressed. The pair of press rollers 50, 50 are heated to a temperature equal to or higher than the glass transition temperature of the catalyst layer 9 and the glass transition temperature of the electrolyte membrane 2 by the temperature regulator 51. Then, hot-roll pressing is performed in which the electrolyte membrane 2 having the catalyst layer 9 formed thereon is compressed while being heated between the pair of press rollers 50, 50.

The hot-roll pressing enables the surface of the electrolyte membrane 2 to be almost flat. In other words, although the catalyst layer 9 immediately after formation may be bulged at its edge portion as shown in FIG. 8, hot-roll pressing by the pair of press rollers 50, 50 removes such a bulge. As a result, the edge portion of the catalyst layer 9 is made uniform, thereby making the front surface of the electrolyte membrane 2 almost flat. Although the pair of press rollers 50, 50 are heated to a temperature equal to or higher than the glass transition temperatures of the catalyst layer 9 and the electrolyte membrane 2, the pair of press rollers 50, 50 come into contact with the electrolyte membrane 2 and the catalyst layer 9 for a moment. This prevents the electrolyte membrane 2 from becoming softened and then coming into excessively intimate contact with the backsheet 6.

Hot-roll pressing can reduce a difference in the contraction stress between a non-applied portion and an applied portion (region where the catalyst layer 9 is formed) of the electrolyte membrane 2 to also prevent or reduce wrinkles generated at an interface between the non-applied portion and the catalyst layer 9 when the backsheet 6 is peeled off the electrolyte membrane 2. The electrolyte membrane 2 is made of a polymeric material. It is well known that at a glass transition temperature or higher temperature, the polymeric material has an active behavior of mitigating a molecular chain and has greatly changing frictional properties and viscoelastic properties of the surface. The press stress by the pair of press rollers 50, 50 may be such a stress that does not deform the electrolyte membrane 2 and the backsheet 6.

The electrolyte membrane 2 that has passed through between the pair of press rollers 50, 50 is wound around the winding roller 12 (Step S6). Although the catalyst layer 9 formed on the front surface of the electrolyte membrane 2 comes into contact with the backsheet 6 attached to the rear surface of the electrolyte membrane 2 in this case, no problem arises because the catalyst layer 9 has been fully dried. As a result, the catalyst layer forming apparatus 100 completes a film deposition process of forming the catalyst layer 9 on the front surface of the electrolyte membrane 2.

This embodiment performs two stages of drying processes on the catalyst ink layer 8, applied on the front surface of the electrolyte membrane 2 with the backsheet 6, in the first drying furnace 30 and the second drying furnace 40. The first drying furnace 30 performs a preliminary drying process of blowing a hot air of the first temperature T1 toward the catalyst ink layer 8 after the application process to evaporate a solvent from the catalyst ink layer 8. The first drying furnace 30 evaporates the solvent contained in the catalyst ink layer 8 until the solvent is 30% or less of that before heating. If a hot air of a temperature higher than the first temperature T1 is blown, the temperature of the catalyst ink layer 8 does not rise beyond a certain temperature until the solvent contained in the catalyst ink layer 8 is 30% or less of that before heating. In other words, the first drying furnace 30 blows a hot air of the first temperature T1 equal to or higher than the boiling point of the solvent of the catalyst ink toward the catalyst ink layer 8 and, while 30% or more of the solvent remains, evaporates the solvent without increasing the temperature of the catalyst ink layer 8 so as not to exceed a certain temperature until the solvent contained in the catalyst ink layer 8 is 30% or less of that before heating. The first temperature T1 is lower than the glass transition temperature of the electrolyte membrane 2, preventing the electrolyte membrane 2 from becoming softened and then coming into excessively intimate contact with the backsheet 6.

Meanwhile, the second drying furnace 40 performs a finish drying process of blowing a hot air of the second temperature T2 higher than the first temperature T1 toward the catalyst ink layer 8, which has been preliminarily dried in the first drying furnace 30, thereby changing the catalyst ink layer 8 into the catalyst layer 9. The second drying furnace 40 blows the hot air of the second temperature T2 toward the catalyst ink layer 8, whose solvent has been reduced to 30% or less of that before heating, so that the temperature of the catalyst ink layer 8 rises further. The second temperature T2 is higher than the glass transition temperature of the catalyst layer 9 formed of a dried catalyst ink layer 8, leading to a decreased moisture content of the catalyst layer 9. In other words, the second drying furnace 40 blows the hot air of the second temperature T2 toward the catalyst ink layer 8 after the preliminary drying process to further evaporate the solvent contained in the catalyst ink layer 8, thereby forming the catalyst layer 9 and decreasing the moisture content of the catalyst layer 9. The drying process time of the second drying furnace 40 is not more than half the time of the first drying furnace 30. This prevents, if the second temperature T2 is equal to or higher than the glass transition temperature of the electrolyte membrane 2, the electrolyte membrane 2 from becoming softened and then coming into excessively intimate contact with the backsheet 6.

As described above, this embodiment performs two stages of drying processes in the first drying furnace 30 and the second drying furnace 40, enabling the formation of a catalyst layer 9 having a low moisture content while preventing or reducing malfunctions (specifically, intimate contact of the electrolyte membrane 2 with the backsheet 6) due to excessive heating. The catalyst layer 9, whose moisture content is kept low, can improve the drainage performance of a CCM that will be completed later through the formation of an anode electrode and also enhance the power generation performance of a fuel cell.

While the embodiment of the invention has been described, numerous modifications and variations can be devised without departing from the scope of the invention. For example, the embodiment above applies a catalyst ink for a cathode to the front surface of the electrolyte membrane 2 to form the catalyst layer 9 of the cathode. Alternatively, a catalyst ink for an anode may be applied to the front surface of the electrolyte membrane 2 to form a catalyst layer 9 for an anode. If a catalyst layer 9 for an anode is formed, in the same manner as the embodiment above, a catalyst layer 9 having a low moisture content can be formed while preventing or reducing malfunctions due to excessive heating.

The catalyst ink layer for an anode is slimmer than that for a cathode, and the reaction water produced in the electrochemical reaction of a fuel cell is produced at a cathode electrode. The technology according to the present invention is therefore more preferable in the formation of a catalyst layer 9 for a cathode.

The first temperature T1, being the temperature of a hot air in the first drying furnace 30, does not necessarily need to be lower than the glass transition temperature of the electrolyte membrane 2 and may be equal to or higher than the glass transition temperature of the electrolyte membrane 2. From the viewpoint of preventing the electrolyte membrane 2 from coming into excessively intimate contact with the backsheet 6 in the first drying furnace 30, the first temperature T1 is preferably lower than the glass transition temperature of the electrolyte membrane 2.

The first drying furnace 30 and the second drying furnace 40 are not limited to hot air drying furnaces but may be infrared heaters that emit infrared radiation for heating. Also in this case, the first drying furnace 30 heats the electrolyte membrane 2 at the first temperature T1, and the second drying furnace 40 heats the electrolyte membrane 2 at the second temperature T2, thereby drying a catalyst ink.

The embodiment above applies a catalyst ink from the coating nozzle 20 having a slit-shaped discharge port by the slit-coat method. Alternatively, a catalyst ink may be applied to the electrolyte membrane 2 by the spray coating method or the blade coating method.

Hot-roll pressing by a pair of press rollers 50, 50 is not necessarily required. However, hot-roll pressing is preferably performed from the viewpoint of preventing or reducing wrinkles in the electrolyte membrane 2.

The present invention is applicable to the technique of applying a catalyst ink to a polyelectrolyte membrane for a polymer electrolyte fuel cell and drying the catalyst ink to form a catalyst layer on the front surface of the electrolyte membrane. In particular, the present invention is preferably applied to the formation of a catalyst layer for a cathode electrode, in which reaction water is produced in cell reaction.

While the invention has been shown and described in detail, the foregoing description is in all aspects illustrative and not restrictive. It is therefore understood that numerous modifications and variations can be devised within the scope of protection conferred by the claims.

## Claims

1. A catalyst layer forming method of forming a catalyst layer (9) on a surface of an electrolyte membrane (2) of a fuel cell, the method comprising the steps of:
(a) transporting an electrolyte membrane (2) having a support film (6) attached to a first surface thereof;
(b) applying a catalyst ink (8) to part of a second surface of said electrolyte membrane (2);
(c) heating said electrolyte membrane (2) applied with said catalyst ink (8) at a first temperature to evaporate a solvent contained in said catalyst ink (8) to 30% or less of that before heating; and
(d) heating said electrolyte membrane (2) at a second temperature higher than said first temperature and drying said catalyst ink (8) to form a catalyst layer (9) after said step (c), said second temperature being higher than a glass transition temperature of said catalyst layer (9) and being lower than a melting point of said catalyst layer (9); wherein
said first temperature being equal to or higher than a boiling point of said solvent of said catalyst ink (8) and lower than a glass transition temperature of said electrolyte membrane (2).

2. The catalyst layer forming method according to claim 1, further comprising the step of sandwiching said electrolyte membrane (2) having said catalyst layer (9) formed thereon between a pair of press rollers (50) to compress said electrolyte membrane (2) after said step (d),
wherein said pair of press rollers (50) are regulated to a temperature equal to or higher than the glass transition temperature of said catalyst layer (9) and equal to or higher than said glass transition temperature of said electrolyte membrane (2).

3. The catalyst layer forming method according to any one of claims 1 to 2, wherein a cathode catalyst layer (9) is formed on the second surface of said electrolyte membrane (2).

4. A catalyst layer forming apparatus (100) that is adapted to form a catalyst layer (9) on a surface of an electrolyte membrane (2) of a fuel cell, said apparatus (100) comprising:
a transport part (11) that is adapted to transport an electrolyte membrane (2) having a support film (6) attached to a first surface thereof;
an application part (20) that is adapted to apply a catalyst ink (8) to part of a second surface of said electrolyte membrane (2);
a first drying part (30) that is adapted to heat said electrolyte membrane (2) applied with said catalyst ink (8) at a first temperature to evaporate a solvent contained in said catalyst ink (8) to 30% or less of that before heating; and
a second drying part (40) that is adapted to heat said electrolyte membrane (2) heated in said first drying part (30) at a second temperature higher than said first temperature and to dry said catalyst ink (8) to form a catalyst layer (9), said second temperature being higher than a glass transition temperature of said catalyst layer (9) and being lower than a melting point of said catalyst layer (9); wherein
said first temperature being equal to or higher than a boiling point of said solvent of said catalyst ink (8) and lower than a glass transition temperature of said electrolyte membrane (2).

5. The catalyst layer forming apparatus (100) according to claim 4, further comprising a pair of press rollers (50) that are adapted to sandwich said electrolyte membrane (2) having said catalyst layer (9) formed thereon in said second drying part (40) to compress said electrolyte membrane (2),
wherein said pair of press rollers (50) are regulated to a temperature equal to or higher than the glass transition temperature of said catalyst layer (9) and the glass transition temperature of said electrolyte membrane (2).

6. The catalyst layer forming apparatus (100) according to any one of claims 4 to 5, wherein said electrolyte membrane (2) has a cathode catalyst layer (9) formed on the second surface thereof.

## Patentansprüche

1. Katalysatorschicht-Bildungsverfahren zum Bilden einer Katalysatorschicht (9) auf einer Oberfläche einer Elektrolytmembran (2) einer Brennstoffzelle, wobei das Verfahren die folgenden Schritte umfasst:
(a) Transportieren einer Elektrolytmembran (2) mit einem Trägerfilm (6), der an einer ersten Oberfläche davon angebracht ist;
(b) Aufbringen einer Katalysatortinte (8) auf einen Teil einer zweiten Oberfläche der Elektrolytmembran (2);
(c) Erwärmen der Elektrolytmembran (2), auf die die Katalysatortinte (8) aufgebracht ist, auf eine erste Temperatur, um ein in der Katalysatortinte (8) enthaltenes Lösungsmittel auf 30 % oder weniger von dem vor dem Erwärmen zu verdampfen; und
(d) Erwärmen der Elektrolytmembran (2) auf eine zweite Temperatur, die höher als die erste Temperatur ist, und Trocknen der Katalysatortinte (8) zur Bildung einer Katalysatorschicht (9) nach Schritt (c), wobei die zweite Temperatur höher als eine Glasübergangstemperatur der Katalysatorschicht (9) und niedriger als ein Schmelzpunkt der Katalysatorschicht (9) ist; wobei
die erste Temperatur gleich oder höher als ein Siedepunkt des Lösungsmittels der Katalysatortinte (8) und niedriger als eine Glasübergangstemperatur der Elektrolytmembran (2) ist.

2. Katalysatorschicht-Bildungsverfahren nach Anspruch 1, das ferner den Schritt des sandwichartigen Anordnens der Elektrolytmembran (2) mit der darauf ausgebildeten Katalysatorschicht (9) zwischen ein Paar Presswalzen (50) zum Komprimieren der Elektrolytmembran (2) Schritt (d) umfasst,
wobei das Paar Presswalzen (50) auf eine Temperatur geregelt wird, die gleich oder höher als die Glasübergangstemperatur der Katalysatorschicht (9) und gleich oder höher als die Glasübergangstemperatur der Elektrolytmembran (2) ist.

3. Katalysatorschicht-Bildungsverfahren nach einem der Ansprüche 1 bis 2, wobei eine Kathodenkatalysatorschicht (9) auf der zweiten Oberfläche der Elektrolytmembran (2) gebildet wird.

4. Katalysatorschicht-Bildungsvorrichtung (100), die zum Bilden einer Katalysatorschicht (9) auf einer Oberfläche einer Elektrolytmembran (2) einer Brennstoffzelle ausgelegt ist, wobei die Vorrichtung (100) Folgendes umfasst:
einen Transportteil (11), der zum Transportieren einer Elektrolytmembran (2) mit einem Trägerfilm (6), der an einer ersten Oberfläche davon angebracht ist, ausgelegt ist;
einen Aufbringteil (20), der zum Aufbringen einer Katalysatortinte (8) auf einen Teil einer zweiten Oberfläche der Elektrolytmembran (2) ausgelegt ist;
einen ersten Trocknungsteil (30), der zum Erwärmen der Elektrolytmembran (2) ausgelegt ist, auf die die Katalysatortinte (8) aufgebracht ist, auf eine erste Temperatur, um ein in der Katalysatortinte (8) enthaltenes Lösungsmittel auf 30 % oder weniger von dem vor dem Erwärmen zu verdampfen; und
einen zweiten Trocknungsteil (40), der zum Erwärmen der Elektrolytmembran (2), die in dem ersten Trocknungsteil (30) erwärmt wird, auf eine zweite Temperatur, die höher als die erste Temperatur ist, und zum Trocknen der Katalysatortinte (8) zur Bildung einer Katalysatorschicht (9) ausgelegt ist, wobei die zweite Temperatur höher als eine Glasübergangstemperatur der Katalysatorschicht (9) und niedriger als ein Schmelzpunkt der Katalysatorschicht (9) ist; wobei
die erste Temperatur gleich oder höher als ein Siedepunkt des Lösungsmittels der Katalysatortinte (8) und niedriger als eine Glasübergangstemperatur der Elektrolytmembran (2) ist.

5. Katalysatorschicht-Bildungsvorrichtung (100) nach Anspruch 4, ferner umfassend ein Paar Presswalzen (50), die ausgelegt sind, die Elektrolytmembran (2) mit der darauf ausgebildeten Katalysatorschicht (9) in dem zweiten Trocknungsteil (40) zum Komprimieren der Elektrolytmembran (2) sandwichartig anzuordnen,
wobei das Presswalzenpaar (50) auf eine Temperatur geregelt wird, die gleich oder höher als die Glasübergangstemperatur der Katalysatorschicht (9) und die Glasübergangstemperatur der Elektrolytmembran (2) ist.

6. Katalysatorschicht-Bildungsvorrichtung (100) nach einem der Ansprüche 4 bis 5, wobei die Elektrolytmembran (2) eine Kathodenkatalysatorschicht (9) aufweist, die auf ihrer zweiten Oberfläche ausgebildet ist.

## Revendications

1. Procédé de formation de couche de catalyseur pour former une couche de catalyseur (9) sur une surface d'une membrane à électrolyte (2) d'une pile à combustible, le procédé comprenant les étapes de :
(a) transport d'une membrane à électrolyte (2) dont un film de support (6) est fixé à une première surface de celle-ci ;
(b) application d'une encre de catalyseur (8) à une partie d'une seconde surface de ladite membrane à électrolyte (2) ;
(c) chauffage de ladite membrane à électrolyte (2) appliquée avec ladite encre de catalyseur (8) à une première température pour évaporer un solvant contenu dans ladite encre de catalyseur (8) à 30 % ou moins de celle avant chauffage ; et
(d) chauffage de ladite membrane à électrolyte (2) à une seconde température plus haute que ladite première température et séchage de ladite encre de catalyseur (8) pour former une couche de catalyseur (9) après ladite étape (c), ladite seconde température étant plus haute qu'une température de transition vitreuse de ladite couche de catalyseur (9) et étant plus basse qu'un point de fusion de ladite couche de catalyseur (9) ; dans lequel
ladite première température étant égale à ou plus haute qu'un point d'ébullition dudit solvant de ladite encre de catalyseur (8) et plus basse qu'une température de transition vitreuse de ladite membrane à électrolyte (2).

2. Procédé de formation de couche de catalyseur selon la revendication 1, comprenant en outre l'étape d'interposition de ladite membrane à électrolyte (2) sur laquelle est formée ladite couche de catalyseur (9) entre une paire de rouleaux presseurs (50) pour comprimer ladite membrane à électrolyte (2) après ladite étape (d),
dans lequel ladite paire de rouleaux presseurs (50) est régulée à une température égale à ou plus haute que la température de transition vitreuse de ladite couche de catalyseur (9) et égale à ou plus haute que ladite température de transition vitreuse de ladite membrane à électrolyte (2).

3. Procédé de formation de couche de catalyseur selon l'une quelconque des revendications 1 à 2, dans lequel une couche de catalyseur de cathode (9) est formée sur la seconde surface de ladite membrane à électrolyte (2).

4. Appareil de formation de couche de catalyseur (100) qui est adapté pour former une couche de catalyseur (9) sur une surface d'une membrane à électrolyte (2) d'une pile à combustible, ledit appareil (100) comprenant :
une partie de transport (11) qui est adaptée pour transporter une membrane à électrolyte (2) dont un film de support (6) est fixé à une première surface de celle-ci ;
une partie d'application (20) qui est adaptée pour appliquer une encre de catalyseur (8) à une partie d'une seconde surface de ladite membrane à électrolyte (2) ;
une première partie de séchage (30) qui est adaptée pour chauffer ladite membrane à électrolyte (2) appliquée avec ladite encre de catalyseur (8) à une première température pour évaporer un solvant contenu dans ladite encre de catalyseur (8) à 30 % ou moins de celle avant chauffage ; et
une seconde partie de séchage (40) qui est adaptée pour chauffer ladite membrane à électrolyte (2) chauffée dans ladite première partie de séchage (30) à une seconde température plus haute que ladite première température et pour sécher ladite encre de catalyseur (8) pour former une couche de catalyseur (9), ladite seconde température étant plus haute qu'une température de transition vitreuse de ladite couche de catalyseur (9) et étant plus basse qu'un point de fusion de ladite couche de catalyseur (9) ; dans lequel
ladite première température étant égale à ou plus haute qu'un point d'ébullition dudit solvant de ladite encre de catalyseur (8) et plus basse qu'une température de transition vitreuse de ladite membrane à électrolyte (2).

5. Appareil de formation de couche de catalyseur (100) selon la revendication 4, comprenant en outre une paire de rouleaux presseurs (50) qui sont adaptés pour interposer ladite membrane à électrolyte (2) sur laquelle est formée ladite couche de catalyseur (9) dans ladite seconde partie de séchage (40) pour comprimer ladite membrane à électrolyte (2),
dans lequel ladite paire de rouleaux presseurs (50) est régulée à une température égale à ou plus haute que la température de transition vitreuse de ladite couche de catalyseur (9) et que la température de transition vitreuse de ladite membrane à électrolyte (2).

6. Appareil de formation de couche de catalyseur (100) selon l'une quelconque des revendications 4 à 5, dans lequel ladite membrane à électrolyte (2) comporte une couche de catalyseur de cathode (9) formée sur sa seconde surface.
